# EUROPÄISCHE PATENTSCHRIFT

(11) **EP 0 941 949 B1**
(45) Veröffentlichungstag und Bekanntmachung des Hinweises auf die Patenterteilung: **25.08.2004**
(21) Anmeldenummer: 99810077.0
(22) Anmeldetag: 29.01.1999
(51) Int. Cl.: B65G 1/06, B65G 1/02

(54) **Regallageranlage zur Aufnahme von Rolluntersätzen sowie Rolluntersatz für eine Regallageranlage**
Shelf storage plant for receiving rolling socles and rolling socle for a storage plant
Installation de stockage étagère pour recevoir des socles roulants et socle roulant pour un installation de stockage

(30) Priorität: 09.03.1998 CH 55298
(43) Veröffentlichungstag der Anmeldung: 15.09.1999
(73) Patentinhaber: Dreier Systemtechnik AG, 4153 Reinach/BL (CH)
(72) Erfinder: Erich Dreier, 4245 Kleinlützel (CH)
(74) Vertreter: Rottmann, Maximilian R.

(56) Entgegenhaltungen:
- EP-A- 0 173 346
- EP-A- 0 553 060
- CH-A- 557 769
- CH-A- 652 375
- DE-A- 3 737 065
- DE-C- 3 939 916
- DE-U- 9 319 992
- US-A- 4 304 521
- DIPL. ING. H.R.HALDIMAN: "DIE ROLLPALETTE IN NEUER GESTALT-EUROLLPA" FORDERN UND HEBEN , Bd. 24, Nr. 2, Februar 1974, Seiten 163-164, XP002106291 65 MAINZ.BRD.

## Beschreibung

Die Erfindung betrifft eine Regallageranlage zur Aufnahme von Rolluntersätzen nach dem Oberbegriff des Anspruchs 1 sowie einen Rolluntersatz für eine Regallageranlage nach dem Oberbegriff des Anspruchs 14.

Regallageranlagen der hier zur Rede stehenden Art dienen der Aufnahme von Rolluntersätzen, insbesondere von Rolluntersätzen, welche mit palettierten Gütern beladen sind. Die Regallageranlagen weisen eine Vielzahl von mit Schienen versehene Lagerkanäle auf, in denen die Rolluntersätze hintereinander gereiht aufgenommen werden. Um Platz zu sparen, erfolgt das Ein- und Auslagern der Rolluntersätze von ein und derselben Seite der Regallageranlage. Beim Einschieben eines neuen Rolluntersatzes werden die sich bereits im Lagerkanal befindlichen Rolluntersätze vom neu einzuschiebenenden Rolluntersatz nach hinten gestossen. Dabei muss sichergestellt werden, dass sich die auf den Paletten aufgenommenen Güter weder auf dem Rolluntersatz noch auf den Paletten verschieben.

Um bei der Entnahme des vordersten Rolluntersatzes die dahinter liegenden Rolluntersätze zur Entnahmeseite hin nachrücken zu lassen, sind entweder Kupplungsmittel vorgesehen, mittels welchen die eingelagerten Rolluntersätze untereinander verbunden sind, oder die Schienen weisen zu der Entnahmeseite hin ein Gefälle auf, so dass sich die in der Regallageranlage verbleibenden Rolluntersätze der Schwerkraft folgend zur Entnahmeseite hin bewegen. Dadurch braucht kein Antrieb vorgesehen zu werden.

Um die bekannten Rolluntersätze mitsamt den darauf aufgenommenen palettierten Gütern in Regallageranlagen ein- und auslagern zu können, sind automatische Regalbedienungsgeräte bekannt, mittels welchen die Rolluntersätze dem Regalkanal in genau definierter Position übergeben bzw. aus diesem entnommen werden können. Dies ist insofern wichtig, da die Schienen, auf denen die Rolluntersätze aufgesetzt werden, einerseits relativ schmal sind und andererseits sichergestellt werden muss, dass sich die auf den Paletten aufgenommenen Güter beim Einlagern von Rolluntersätzen nicht auf den Paletten verschieben. Diese Gefahr besteht insbesondere dann, wenn der neu einzulagernde Rolluntersatz etwas zu hoch eingeschoben wird, so dass sich die Puffer des einzuschiebenden Rolluntersatzes nicht an den Puffern des sich bereits im Lagerkanal befindlichen Rolluntersatzes anlegen.

Aus der DE 32 24 348 ist eine Hochregalanlage für palettierte Waren bekannt, bei welcher ein in den Regalgängen operierendes Regalbedienungsgerät vorgesehen ist, mittels welchem die gewünschte Palette der Hochregalanlage entnommen und einem Abhoplplatz übergeben werden kann. Am Abhoplplatz übernimmt ein Verschiebewagen die Palette und führt diese an einen Kommissionierplatz. Ebenso dient das Regalbedienungsgerät dazu Paletten, welche mittels des Verschiebewagens vom Kommissionierplatz abgeholt wurden, der Hochregalanlage wieder zuzuführen. Allerdings sind bei dieser Lageranlage Rollentragketten anstelle von Rolluntersätzen vorgesehen.

Im weiteren ist aus der DE 1 756 596 eine Lageranlage bekannt, welche mit zumindest einem Regalbedienungsgerät versehen ist. Das Regalbedienungsgerät ist dabei an Trägern abgestützt, welche sich über die gesamte Höhe des Regals erstrecken. Entlang von diesen Trägem kann das Regalbedienungsgerät vertikal verschoben werden. Um das Regalbedienungsgerät horizontal verschieben zu können, sind Führungen vorgesehen, in denen sich an den Trägern angebrachte Rollen abwälzen. Auch bei dieser Lageranlage sind Rollentragketten anstelle von Rolluntersätzen vorgesehen.

Da die vorgängig beschriebenen Regalbedienungsgeräte teuer sind, relativ viel Platz beanspruchen und zudem regelmässig gewartet werden müssen, wäre es wünschenswert, wenn diese weggelassen werden könnten und die Güter mit einem Gabelstapler in die Regallageranlage ein- und ausgelagert werden könnten. Um den Aufbau der Regallageranlage möglichst einfach zu halten, sollten die palettierten Güter direkt auf Rolluntersätzen aufgenommen werden können.

Es ist daher die Aufgabe der vorliegenden Erfindung, eine Regallageranlage zur Aufnahme von Rolluntersätzen nach dem Oberbegriff des Anspruchs 1 derart auszugestalten, dass die Rolluntersätze mittels eines Gabelstaplers einfach, sicher und schnell in die Regallageranlage ein- und ausgelagert werden können.

Diese Aufgabe wird durch ein Regallageranlage gelöst, welche mit den im Kennzeichen des Anspruchs 1 angeführten Merkmalen versehen ist.

Dadurch, dass die Lagerkanäle der Regallageranlage im Einschubbereich mit Zentriermitteln versehen sind, die Führungsflächen zum horizontalen Vorpositionieren, Auflageflächen zum vertikalen Vorpositionieren und Führungsflächen zum horizontalen Feinpositionieren eines einzulagernden Rolluntersatzes aufweisen, kann sichergestellt werden, dass ein Rolluntersatz beim Einlagern auf die Laufschienen des Lagerkanals ausgerichtet wird. Dies ist insofern notwendig, da ein mittels eines Gabelstaplers zugeführter Rolluntersatz vom Staplerfahrer im Normalfall ohne Hilfsmittel nicht genügend schnell und genau auf den Lagerkanal bzw. auf die Laufschienen ausgerichtet werden kann.

Eine weitere Aufgabe der Erfindung besteht darin, einen Rolluntersatz vorzuschlagen, welcher sich eignet, in die erfindungsgemäss ausgestaltete Regallageranlage eingelagert zu werden.

Diese Aufgabe wird durch einen Rolluntersatz gelöst, der mit den im Kennzeichen des Anspruchs 14 angeführten Merkmalen versehen ist.

Bevorzugte Ausführungsbeispiele des Rolluntersatzes sind in den abhängigen Ansprüchen 15 bis 24 umschrieben.

Nachfolgend wird ein bevorzugtes Ausführungsbeispiel der Erfindung anhand von Zeichnungen näher erläutert. In diesen Zeichnungen zeigt:
Fig. 1 einen Rolluntersatz in einer Draufsicht;
Fig. 2 den Rolluntersatz in einer Ansicht von der Stirnseite;
Fig. 3 den Rolluntersatz in einer Ansicht von der Längsseite;
Fig. 4 eine perspektivische Ansicht des Rolluntersatzes mit einer teilweise ersichtlichen Palette;
Fig. 5 eine Teilansicht des Einschubbereichs eines Lagerkanals;
Fig. 6 eine Ansicht von vorne auf den Einschubbereich des Lagerkanals;
Fig. 7 bis 9 drei unterschiedliche Ansichten eines Einschubbügels;
Fig. 10 bis 12 drei unterschiedliche Ansichten einer Zentrierschiene;
Fig. 13 eine Be- und Entladestation für Rolluntersätze;
Fig. 14 eine Mehrzahl von aufeinander gestapelten Rolluntersätzen, und
Fig. 15 ein Kupplungselement für Rolluntersätze.

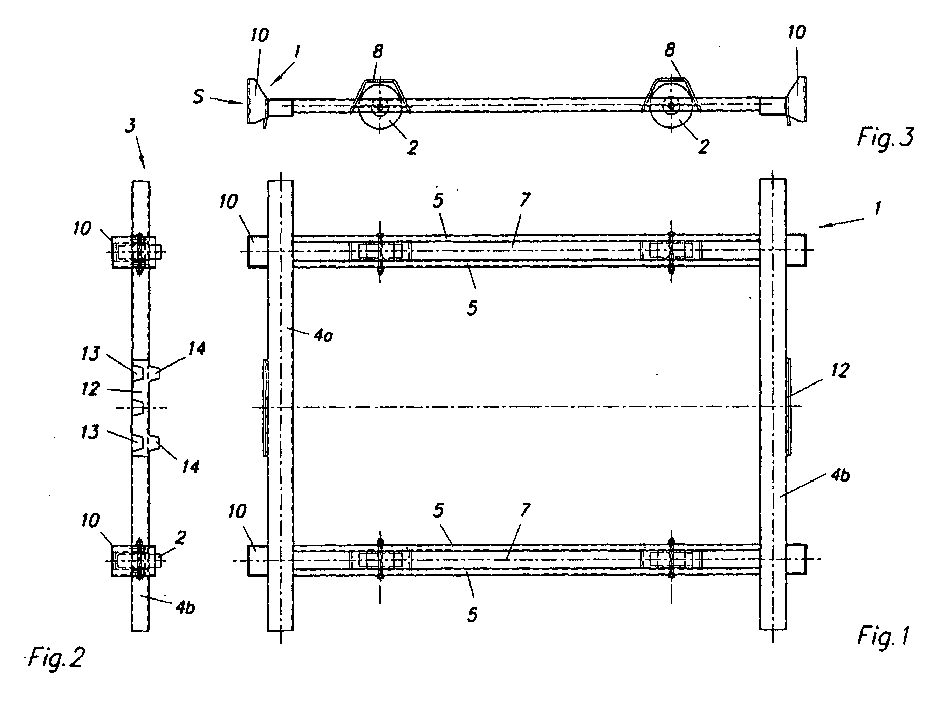

Anhand der Figuren 1 bis 3, welche den Rolluntersatz in einer Draufsicht, in einer Ansicht von der Stirnseite und in einer Ansicht von der Längsseite zeigen, wird die Ausbildung eines Rolluntersatzes näher erläutert.

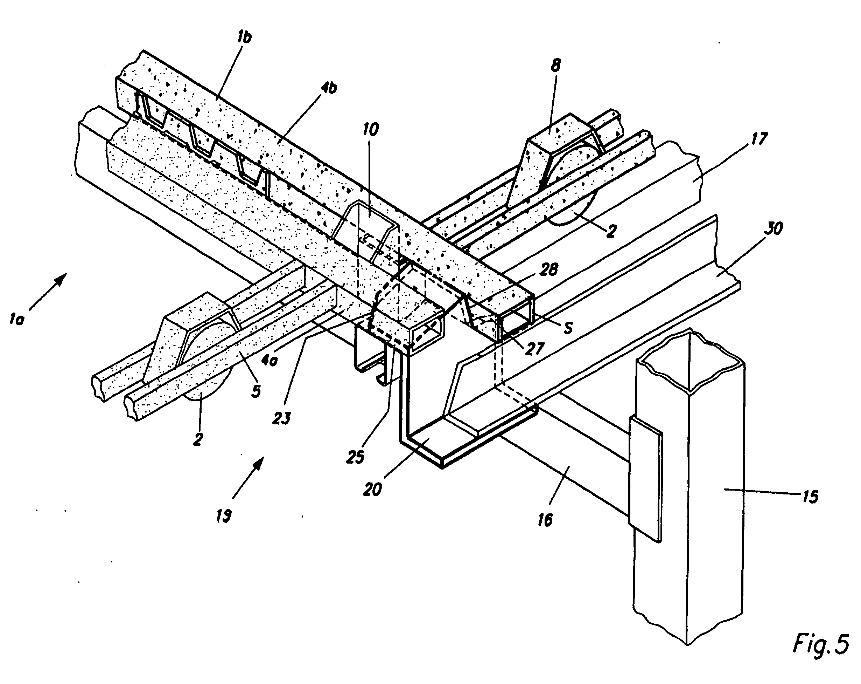

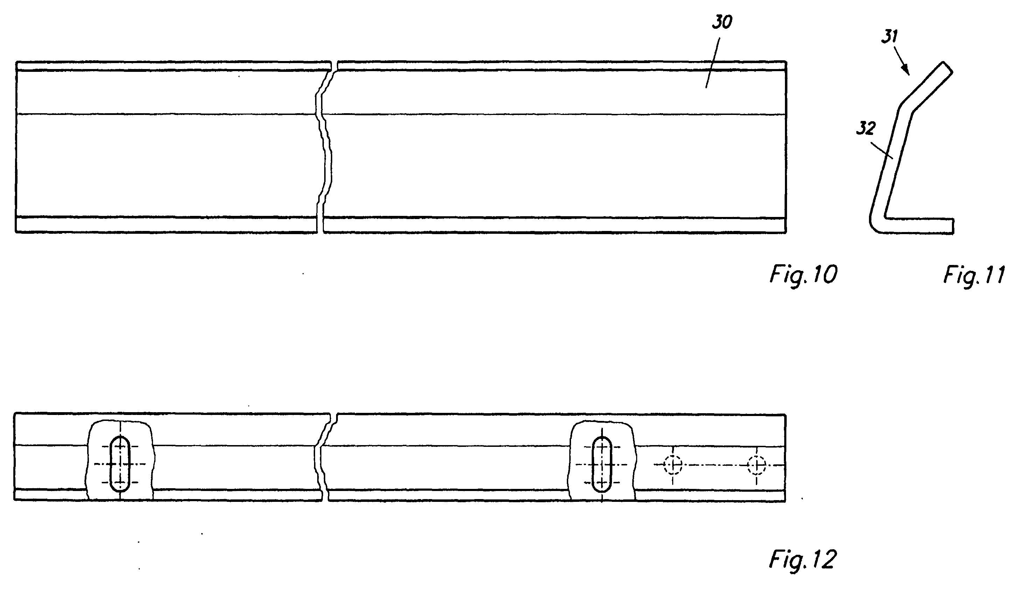

Der Rolluntersatz 1 besteht im wesentlichen aus einem mit vier Rollen 2 versehenen Rahmen 3, der durch zwei Querträger 4a, 4b und vier Längsträger 5 gebildet wird. Die Längsträger 5 sind paarweise auf beiden Seiten angeordnet und mit einem Zwischenraum 7 versehen, in dem die Tragrollen 2 aufgenommen sind. Die Tragrollen 2 sind auf der Oberseite von einem Schutzbügel 8 abgedeckt, der schräg verlaufende Seitenflächen 8a, 8b aufweist. Durch diese Schutzbügel 8 wird verhindert, dass die Tragrollen beim Aufsetzen einer Palette beschädigt werden oder blockieren. Die Querträger 4a, 4b überragen die Längsträger 5 seitlich. Auf der Stirnseite jedes Querträgers 4a, 4b sind Mittel zum Übertragen von Schubkräften in Form von Puffern 10 angeordnet, welche die Querträger 4a, 4b bzw. den Rahmen 3 sowohl nach oben wie auch nach unten überragen. Die aus einem U-förmigen Bügel bestehenden Puffer 10 übernehmen noch zusätzliche Funktionen, wie anschliessend anhand der Fig. 5 näher erläutert wird. Die Stirnseite S der Puffer 10 dient als Stossfläche, wobei die der Stossfläche S abgewandte Innenseite I der Puffer 10 schräg ausgebildet ist. Zwischen den Puffern 10 sind an den Querträgern Stapelmittel 12 angeordnet, welche auf der Oberseite mit drei Ausnehmungen 13 und auf der Unterseite mit zwei Erhebungen 14 versehen sind. Die Erhebungen 14 überragen die Unterseite des Rahmens 3 und korrespondieren in der Form und in der Lage mit den Ausnehmungen 13, wobei der mittlere Abstand zwischen zwei benachbarten Erhebungen 14 so gewählt ist, dass dieser geringfügig grösser ist als die Breite eines Puffers 10. Das Stapeln von Rolluntersätzen mittels diesen Stapelmitteln wird nachfolgend anhand der Figur 12 noch näher erläutert.

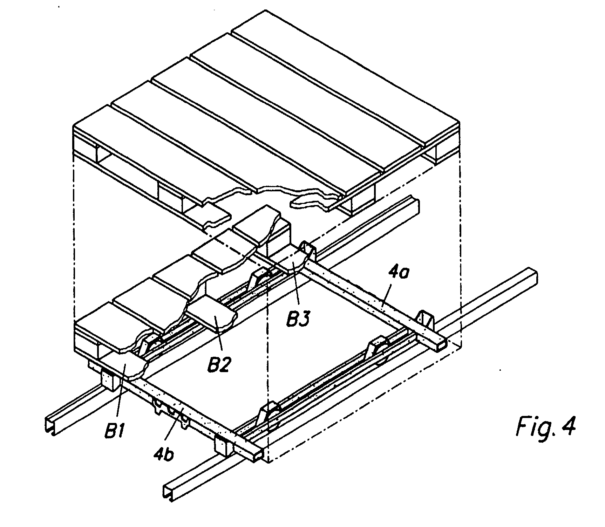

Fig. 4 zeigt in einer perspektivischen Ansicht einen Rolluntersatz 1 mit einer darauf aufgenommenen, nur teilweise dargestellten Palette. Aus dieser Darstellung ist ersichtlich, dass das vordere Bodenbrett B1 der Palette zwischen den vorderen Puffern und den Abdeckungen der vorderen Rollen aufgenommen ist, währenddem das mittlere Bodenbrett B1 in der Mitte zwischen den Abdeckungen der vorderen und der Rollen zu liegen. Beim Abstellen einer Palette auf den Rolluntersatz 1 helfen sowohl die Abdeckungen der Rollen wie auch die auf der Innenseite schräg ausgebildeten Puffer eine Palette zu zentrieren. Der Abstand zwischen den Abdeckungen und den Puffern sowie zwischen den Abdeckungen selbst ist so gewählt, dass Paletten mit unterschiedlichen Abmessungen aufgenommen werden können.

Der Abstand zwischen den zwei Querträgern 4a, 4b des Rolluntersatzes ist vorzugsweise so gewählt, dass er in etwa dem äusseren Abstand der äusseren Bodenbretter B1, B3 der Palette entspricht. Dadurch ist gewährleistet, dass die äusseren Bodenbretter B1, B3 der Palette durchgehend auf den Querträgern 4a, 4b aufliegen. Daher eignet sich ein derartig ausgestalteter Rolluntersatz insbesondere auch zur Aufnahme von Einwegpaletten.

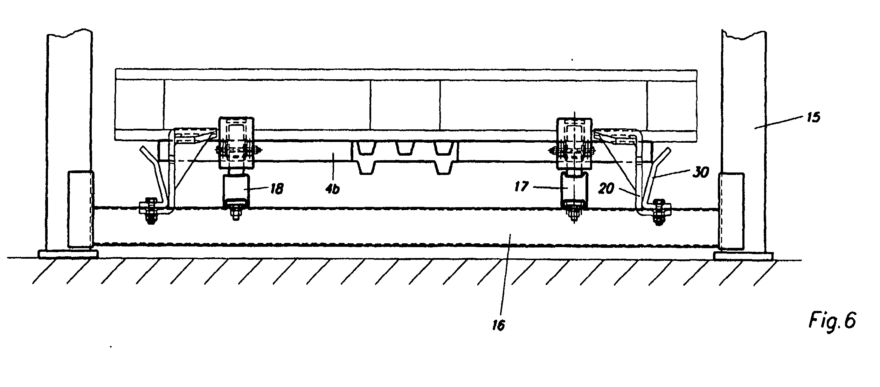

Fig. 5 zeigt in einer perspektivischen Ansicht den Einschubbereich eines Lagerkanals 19, wobei der besseren Übersichtlichkeit wegen nur der rechte Teil des Einschubbereichs dargestellt ist. Fig. 6 zeigt den Einschubbereich in einer Ansicht von vorne. Die tragenden Elemente des Regallagers bestehen aus vertikal verlaufenden Pfosten 15, welche mittels Quertraversen 16 miteinander verbunden sind. Auf der Oberseite der Quertraversen 16 sind die Laufschienen 17, 18 abgestützt. Jeder Lagerkanal 19 des Regallagers ist mit zwei Laufschienen 17, 18 versehen, welche gegen den Einschubbereich hin ein Gefälle aufweisen. Die rechte Laufschiene 17 ist mit einer der Führung des Rolluntersatzes dienenden Vertiefung versehen, die geringfügig breiter ist als eine Rolle des Rolluntersatzes.

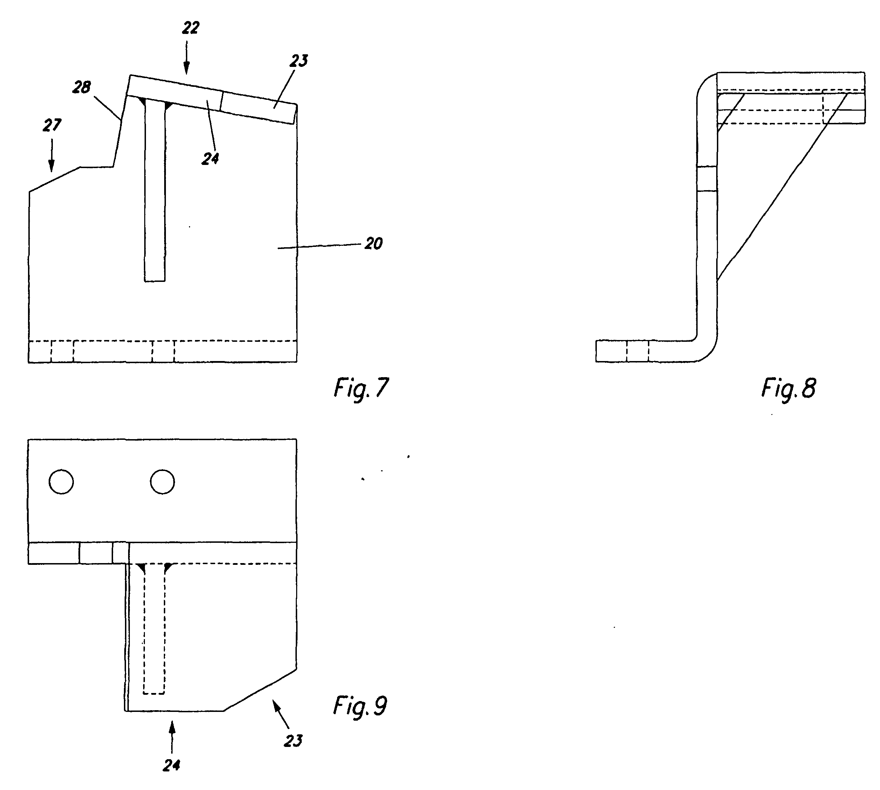

An der Quertraverse 16 ist ein erstes Zentriermittel in Form eines Einschubbügels 20 befestigt, der vor dem eigentlichen Lagerkanal angeordnet ist und mehrere Funktionen übernimmt, wobei für die nachfolgenden Erläuterungen des Einschubbügels 20 auf die Figuren 7 bis 9 verwiesen wird, aus denen die detaillierte Gestaltung des Einschubbügels 20 hervorgeht. Auf der Oberseite ist der Einschubbügel 20 mit einer Auflagefläche 22 versehen, welche als vertikaler Anschlag für die einzulagernden Rolluntersätze dient. Die Auflagefläche 22 wird auf der Innenseite von zwei vertikal verlaufenden Führungsflächen 23, 24 begrenzt, wobei die erste, dem Positionieren eines einzuschiebenden Rolluntersatzes in horizontaler Richtung dienende Führungsfläche 23 unter einem Winkel zur zweiten Führungsfläche 24 verläuft. Mittels diesen beiden Führungsflächen 23, 24 wird ein Rolluntersatz 1 beim Einschieben in einen Lagerkanal horizontal positioniert, da die einander gegenüberliegenden Führungsflächen 23, 24 der zwei Einschubbügel 20 eines Lagerkanals 19 einen sich konisch verengenden Einführbereich bilden. Die beiden Führungsflächen 24 definieren eine Öffnung, deren Breite um weniger als die Breite eines Puffers 10 eines Rolluntersatzes 1 grösser ist als der Abstand zwischen den äusseren Seitenflächen der Puffer 10. Dadurch ist gewährleistet, dass die Puffer 10 des einzulagernden Rolluntersatzes 1 und die Puffer des vordersten, sich bereits im Lagerkanal befindlichen Rolluntersatzes 1b aufeinandertreffen, wie anschliessend noch erläutert wird.

Der Einschubbügel 20 dient im weiteren als Endanschlag für die im Lagerkanal aufgenommenen Rolluntersätze. Dazu weist er auf der dem Lagerkanal zuzuwendenden Innenseite eine ansteigende Auffahrfläche 27 auf, die zu der eigentlichen Anschlagfläche 28 führt, welche gegenüber der Vertikalen um ca. 10° nach hinten geneigt ist. Die Auffahrfläche 27 dient dem Abbremsen der Rolluntersätze, welche beim Entnehmen eines Rolluntersatzes durch die mit einem Gefälle versehenen Laufschienen in Richtung des Einschubbügels 20 rollen.

Auf beiden Seiten der Laufschienen 17, 18 eines Lagerkanals 19 ist je ein zweites Zentriermittel in Form einer Zentrierschiene 30 angeordnet, welche in den Fig. 10 bis 12 in drei unterschiedlichen Ansichten dargestellt ist. Die im wesentlichen L-förmig ausgebildete Zentrierschiene 30 ist mit einer oberen Zentrierfläche 31 und einer unteren Feinzentrierfläche 32 versehen. Die beiden Zentrierschienen 30 sind seitlich derart im Einschubbereich des Lagerkanals angeordnet, dass der lichte Abstand zwischen den Zentrierflächen 31, 32 von oben nach unten abnimmt, wobei der Abstand so gewählt ist, dass er im Übergangsbereich von der Zentrierfläche 31 zu der Feinzentrierfläche 32 in etwa der Länge eines Querträgers des Rolluntersatzes 1 entspricht. Dadurch wird ein Rolluntersatz beim Einschieben in den Lagerkanal an den Zentrierflächen 31, 32 der Zentrierschienen 30 ausgerichtet.

Die Funktion eines derartig ausgestalteten Einschubbereichs stellt sich wie folgt dar:

Beim Einlagern eines Rolluntersatzes wird dieser mittels eines Gabelstaplers angehoben. Beim Untergreifen des Rolluntersatzes muss darauf geachtet werden, dass die Gabeln des Gabelstaplers zwischen den Puffern und den Erhebungen der Stapelmittel zu liegen kommen. Durch die den Rolluntersatz-Rahmen auf der Unterseite überragenden Puffer und Erhebungen wird ein seitliches Abrutschen des Rolluntersatzes von den Gabeln des Gabelstaplers verhindert.

Der Rolluntersatz wird danach mitsamt den darauf aufgenommenen, palettierten Gütern angehoben und zu dem gewünschten Lagerkanal gefahren. Beim Einschieben des Rolluntersatzes 1 in den Lagerkanal 19 wird dieser an den Führungsflächen 23, welche einen sich konisch verengenden Einführbereich bilden, ausgerichtet. Dabei wird der Rolluntersatz gleichzeitig in vertikaler Richtung positioniert wird, indem das äussere Ende der Querstrebe 4a auf der Auflagefläche 22 abgesetzt wird. Durch dieses Vorpositionieren des einzulagernden Rolluntersatzes 1 in vertikaler und in horizontaler Richtung wird sichergestellt, dass die Puffer 10 des einzulagernden Rolluntersatzes 1 und die Puffer des vordersten, sich bereits im Lagerkanal befindlichen Rolluntersatzes 1b aufeinandertreffen. Beim Einlagern eines neuen Rolluntersatzes 1 werden dadurch die sich bereits im Lagerkanal befindlichen Rolluntersätze 1b von dem neu einzulagernden Rolluntersatz 1a nach hinten geschoben, ohne dass die Gefahr besteht, dass sich die Güter auf dem Rolluntersatz verschieben.

Um sicherzustellen, dass die hintere Querstrebe des einzulagernden Rolluntersatzes 1a nicht an der Stirnseite 25 des Einschubbügels 20 ansteht, können entweder die Gabeln des Gabelstaplers etwas nach vorne geneigt werden, oder die Auflagefläche 22 der Einschubbügel 20 wird schräg ausgebildet, so dass sie, in Einschubrichtung gesehen, ansteigt.

Nachdem der Rolluntersatz soweit in den Lagerkanal 19 eingeschoben wurde, dass sich die hintere Quertraverse 4b hinter der Auflagfläche 22 befindet, kann der Rolluntersatz abgesenkt werden. Beim Absenken wird der Rolluntersatz auf die Laufschienen 17 ausgerichtet, indem sich die Stirnseiten S der Quertraversen 4b zuerst an den oberen Zentrier- und danach an den unteren Feinzentrierflächen der Zentrierschienen 30 anlegen. Durch die Zentrierschienen 30 wird somit sichergestellt, dass der Rolluntersatz bzw. dessen Rollen exakt auf die Laufschienen ausgerichtet und darauf abgestellt werden.

Um einen Rolluntersatz aus dem Lagerkanal zu entnehmen, wird dieser mittels des Gabelstaplers über die Auflagefläche angehoben und herausgezogen. Das Anheben des vordersten Rolluntersatzes wird durch die etwas nach hinten geneigte Anschlagfläche erleichtert. Beim Entnehmen des Rolluntersatzes rücken die sich noch im Lagerkanal befindlichen Rolluntersätze automatisch nach, da diese auf einer schiefen Ebene -geneigete Laufschienen- gelagert sind. Durch die ansteigende Auffahrfläche werden die sich im Lagerkanal befindlichen Rolluntersätze vor dem eigentlichen Endanschlag abgebremst, so dass der Endanschlag nur eine minimale Restmenge an kinetischer Energie aufnehmen muss.

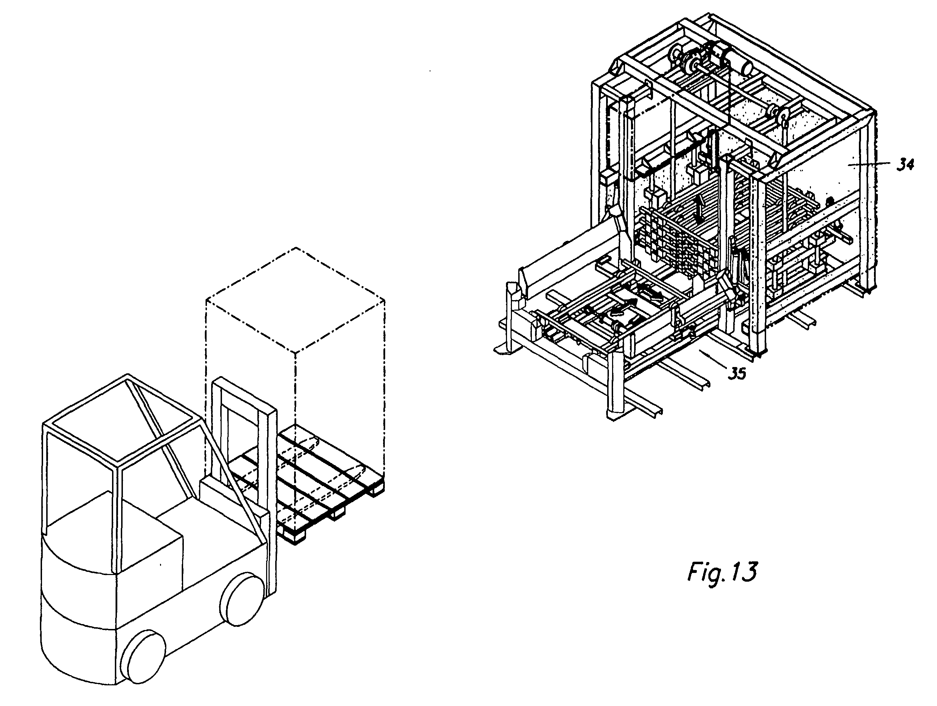

Fig. 13 zeigt eine Station zum Beladen und Entladen von Rolluntersätzen, wobei die Rolluntersätze mit palettierten Gütern -darunter sind auf Paletten aufgenommene Güter zu verstehen- beladen und auch wieder entladen werden. Eine solche Station besteht im wesentlichen aus einem Lagerturm 34 und einer Übergabevorrichtung 35. Der hintere Lagerturm 34 dient als Zwischenspeicher für Rolluntersätze, währenddem die Übergabevorrichtung 35 zum Ein- und Auslagern der Rolluntersätze in den Lagerturm wie auch zum Be- und Entladen der Rolluntersätze dient. Die Übergabevorrichtung weist dazu einen horizontal in zwei Achsen beweglichen Schlitten auf.

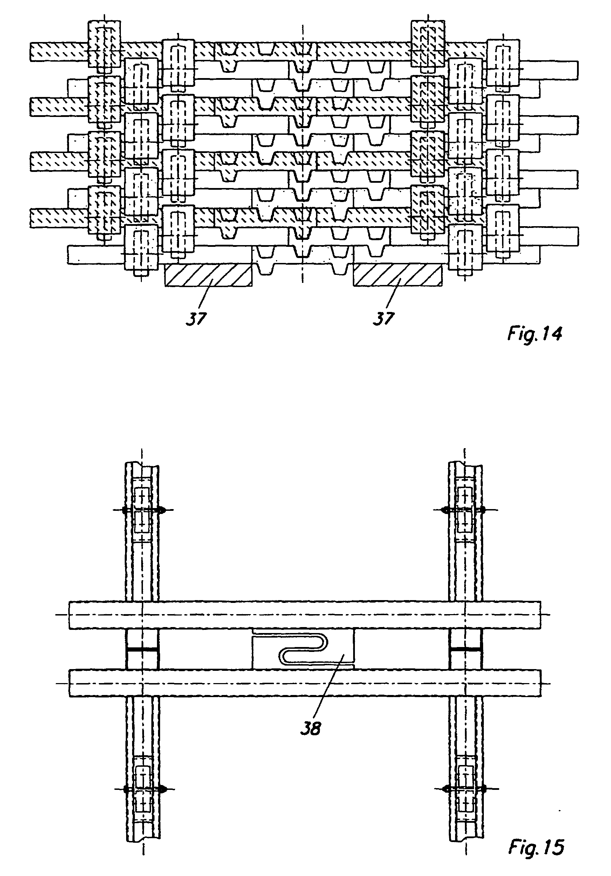

Um eine Mehrzahl von Rolluntersätzen platzsparend lagern zu können, können diese in der in Fig. 14 dargestellten Weise aufeinander gestapelt werden. Ein solcher Stapel kann beispielsweise in einem Lagerkanal aufgenommen werden. Die Stapelmittel stellen dabei sicher, dass die Rolluntersätze in beiden Horizontalachsen geführt und gehalten werden. Dadurch ist sowohl ein manuelles wie auch ein automatisches Stapeln problemlos möglich. Durch die Puffer und die Erhebungen wird ein seitliches Abrutschen des Rolluntersatzes von den Gabeln 37 des Gabelstaplers verhindert.

Fig. 15 zeigt schliesslich ein Kupplungselement für Rolluntersätze, mittels welchem die sich in einem Lagerkanal hintereinander gereihten Rolluntersätze kraftschlüssig koppeln lassen. Die im wesentlichen L-förmig ausgestalteten Kupplungselemente 38 kommen beim Absenken des einzulagernden Rolluntersatzes mit dem vordersten sich bereits im Lagerkanal befindlichen miteinander in Eingriff.

Solche Kupplungsleemente sind insbesondere dann sinnvoll, wenn die Laufschienen nicht mit einem Gefälle versehen sind, da beim Herausziehen des vordersten Rolluntersatzes alle dahinter befindlichen Rolluntersätze mit nach vorne gegen die Entnahmeseite gezogen werden müssen.

Zusammenfassend kann festgehalten werden, dass eine derartig ausgestaltete Regallageranlage einfach im Aufbau ist und schnell und kostengünstig realisiert werden kann. Ausserdem erfordert eine derartige Regallageranlage kaum Unterhalt.

Durch das Vorsehen eines Einschubbügels, der mit vertikalen Führungsflächen zum horizontalen Vorpositionieren eines einzulagernden Rolluntersatzes und mit einer Auflagefläche, auf der die Rolluntersätze in vertikaler Richtung abgestützt werden können, versehen ist, kann ein Rolluntersatz sicher und schnell in einen Lagerkanal eingelagert werden, auch wenn dem Staplerfahrer die Sicht auf den Lagerkanal durch die auf dem Rolluntersatz aufgenommenen Güter verdeckt ist.

Neben dem Vorsehen der erfindungsgemässen Merkmale an neuen Regallageranlagen ist es auch möglich, bereits bestehende Regallageranlagen umzurüsten.

## Patentansprüche

1. Regallageranlage zur Aufnahme von Rolluntersätzen (1), mit einer Mehrzahl von mit Laufschienen (17, 18) versehenen Lagerkanälen (19), in denen die Rolluntersätze (1) hintereinander gereiht lagerbar sind, wobei die Lagerkanäle (19) auf der einen Seite einen Einschubbereich zum Ein- und Auslagern der Rolluntersätze (1) aufweisen, und wobei die Lagerkanäle (19) im Einschubbereich Zentriermittel zum horizontalen und/oder vertikalen Positionieren eines einzulagernden Rolluntersatzes (1) aufweisen, **dadurch gekennzeichnet, dass** erste und zweite Zentriermittel (20, 30) vorgesehen sind, wobei die ersten Zentriermittel (20) Führungsflächen (23, 24) zum horizontalen Vorpositionieren und Auflageflächen (22) zum vertikalen Vorpositionieren aufweisen, und wobei die zweiten Zentriermittel (30) Zentrierflächen (31, 32) zum horizontalen Feinpositionieren eines einzulagernden Rolluntersatzes (1) aufweisen.

2. Regallageranlage nach Anspruch 1, wobei die Rolluntersätze (1) mit Puffern (10) zum Übertragen von Schubkräften versehen sind, **dadurch gekennzeichnet, dass** die Führungsflächen (23, 24) zum horizontalen Vorpositionieren derart ausgebildet sind, dass die Puffer (10) des einzulagernden Rolluntersatzes in horizontaler Richtung auf die Puffer eines sich ggf. bereits im Lagerkanal (19) befindlichen Rolluntersatzes ausgerichtet werden, dass die Auflageflächen (22) zum vertikalen Vorpositionieren derart ausgebildet sind, dass die Puffer des einzulagernden Rolluntersatzes in vertikaler Richtung auf die Puffer eines sich ggf. bereits im Lagerkanal (19) befindlichen Rolluntersatzes ausgerichtet werden, und dass die Zentrierflächen (31, 32) zum horizontalen Feinpositionieren derart ausgebildet sind, dass der einzulagernde Rolluntersatz bzw. dessen Rollen auf die Laufschienen (17, 18) ausgerichtet wird/werden.

3. Regallageranlage nach einem der vorhergehenden Ansprüche, **dadurch gekennzeichnet, dass** im Einschubbereich der Lagerkanäle (19) seitlich der Laufschienen (17) angeordnete Zentriermittel in Form von Zentrierschienen (30) vorgesehen sind, deren Zentrierflächen (31, 32) mit der Vertikalen einen Winkel einschliessen, wobei der lichte Abstand zwischen den Zentrierflächen (31, 32) der in einem Lagerkanal (19) angeordneten Zentrierschienen (30) von oben nach unten abnimmt.

4. Regallageranlage nach Anspruch 3, **dadurch gekennzeichnet, dass** die Zentrierschienen (30) eine obere Zentrierfläche (31) und eine untere Feinzentrierfläche (32) aufweisen.

5. Regallageranlage nach einem der vorhergehenden Ansprüche, **dadurch gekennzeichnet, dass** im Einschubbereich der Lagerkanäle (19) Zentriermittel in Form von Einschubbügeln (20) vorgesehen sind, welche auf der Oberseite mit den Auflageflächen (22) zum vertikalen Abstützen und Ausrichten eines einzulagernden Rolluntersatzes (1) versehen sind.

6. Regallageranlage nach Anspruch 5, **dadurch gekennzeichnet, dass** die Einschubbügel (20) in Einschubrichtung eines einzulagernden Rolluntersatzes (1) gesehen, vor der Auflagefläche (22) eine ansteigende Führungsfläche aufweisen.

7. Regallageranlage nach Anspruch 5 oder 6, **dadurch gekennzeichnet, dass** zwei Einschubbügel (20) vorgesehen sind, welche auf je einer Seite am einschubseitigen Anfang des Einschubbereichs der Lagerkanäle (19) angeordnet sind, wobei die Einschubbügel (20) vertikal verlaufende Führungsflächen (23, 24) zum horizontalen Vorpositionieren eines einzulagernden Rolluntersatzes aufweisen.

8. Regallageranlage nach Anspruch 7, **dadurch gekennzeichnet, dass** die Führungsflächen (24) eine Öffnung definieren, deren Breite um weniger als die Breite eines Puffers (10) eines Rolluntersatzes (1) grösser ist als der Abstand zwischen den äusseren Seitenflächen der Puffer (10).

9. Regallageranlage nach einem der Ansprüche 5 bis 8, **dadurch gekennzeichnet, dass** die Einschubbügel (20) im weiteren eine als Endanschlag wirkende Anschlagfläche (28) für im Lagerkanal (19) aufgenommenen Rolluntersätze aufweisen.

10. Regallageranlage nach Anspruch 9, **dadurch gekennzeichnet, dass** die Einschubbügel (20) eine zu der Anschlagfläche (28) hin ansteigende Auffahrfläche (27) zum Abbremsen der Rolluntersätze aufweisen.

11. Regallageranlage nach einem der Ansprüche 5 bis 10, **dadurch gekennzeichnet, dass** die Anschlagfläche (28) der Einschubbügel (20) unter einem Winkel zur Vertikalen verläuft.

12. Regallageranlage nach einem der vorhergehenden Ansprüche, **dadurch gekennzeichnet, dass** die Laufschienen (17, 18) gegen den Einschubbereich hin ein Gefälle aufweisen.

13. Regallageranlage nach einem der vorhergehenden Ansprüche, **dadurch gekennzeichnet, dass** zumindest eine Laufschiene (17) pro Lagerkanal (19) mit einer Vertiefung zum Führen der Rolluntersätze versehen ist.

14. Rolluntersatz (1) für eine nach dem Anspruch 1 ausgebildete Regallageranlage zur Aufnahme von palettierten Gütern, wobei der Rolluntersatz (1) zum Übertragen von Schubkräften vom einen auf den anderen Rolluntersatz mit Puffern (10) versehen ist, welche eine als Stossfläche ausgebildete Stirnfläche (S) und zwei Seitenflächen aufweisen, **dadurch gekennzeichnet, dass** die Puffer (10) die Unterseite des Rahmens (3) derart überragen, dass deren Seitenflächen mit den Führungsflächen (23, 24) der Einschubbügel (20) beim Einlagern eines Rolluntersatzes (1) zusammenwirken und den Rolluntersatz (1) horizontal vorpositionieren.

15. Rolluntersatz (1) nach Anspruch 14, **dadurch gekennzeichnet, dass** dieser mit einem Rahmen (3) versehen ist, an dem paarweise an beiden Stirnseiten die Puffer (10) angeordnet sind, wobei die Puffer (10) die Oberseite des Rahmens überragen.

16. Rolluntersatz (1) nach Anspruch 15, **dadurch gekennzeichnet, dass** die Puffer (10) auf der zum Rahmen (3) gerichteten, die Oberseite des Rahmens (3) überragenden Innenseite (I) schräg ausgebildet sind und als Zentrierung und/oder Fixierung für aufzunehmende Paletten dienen.

17. Rolluntersatz (1) nach einem der Ansprüche 14 bis 16, **dadurch gekennzeichnet, dass** die Puffer (10) aus je einem U-förmig ausgebildeten Bügel bestehen.

18. Rolluntersatz (1) nach einem der Ansprüche 15 bis 17, **dadurch gekennzeichnet, dass** dessen Rahmen (3) zwei Querträger (4a, 4b) und zumindest zwei Längsträger (5) aufweist, wobei die Querträger (4a, 4b) die Längsträger (5) seitlich überragen.

19. Rolluntersatz (1) nach Anspruch 18, **dadurch gekennzeichnet, dass** der die Längsträger (5) seitlich überragende Bereich der Querträger (4a, 4b) als Anschlagfläche zum vertikalen Ausrichten der Rolluntersätze (1) an den Auflageflächen (22) der Einschubbügel (20) ausgebildet ist.

20. Rolluntersatz (1) nach Anspruch 18 oder 19, **dadurch gekennzeichnet, dass** auf beiden Längsseiten des Rolluntersatzes (1) zwei voneinander beabstandete Längsträger (5) vorgesehen sind, und dass die Tragrollen (2) zwischen den beiden Längsträgern (5) einer Längsseite angeordnet sind.

21. Rolluntersatz (1) nach Anspruch 20, **dadurch gekennzeichnet, dass** die Tragrollen (2) die Oberseite des Rahmens (3) überragen und um mindestens die Breite eines Bodenbretts (B1, B3) einer Palette von der Stirnseite beabstandet sind.

22. Rolluntersatz (1) nach Anspruch 20 oder 21, **dadurch gekennzeichnet, dass** der Abstand zwischen den Tragrollen (2) zumindest der Hälfte der Breite einer Palette entspricht.

23. Rolluntersatz (1) nach einem der Ansprüche 20 bis 22, **dadurch gekennzeichnet, dass** die Tragrollen (2) auf der Oberseite mit einem Schutzbügel (8) versehen sind.

24. Rolluntersatz (1) nach Anspruch 23, **dadurch gekennzeichnet, dass** der Schutzbügel (8) schräg verlaufende Seitenflächen aufweist.

## Claims

1. Rack storage installation for accommodating rolling bases (1), having a plurality of storage channels (19) which are provided with running rails (17, 18) and in which the rolling bases (1) can be stored one behind the other in a row, the storage channels (19), on one side, having a push-in region for storing and retrieving the rolling bases (1), and the storage channels (19), in the push-in region, having centring means for horizontally and/or vertically positioning a rolling base (1) which is to be stored, **characterized in that** first and second centring means (20, 30) are provided, the first centring means (20) having guide surfaces (23, 24) for horizontal preliminary positioning purposes and bearing surfaces (22) for vertical preliminary positioning purposes, and the second centring means (30) having centring surfaces (31, 32) for the horizontal precision positioning of a rolling base (1) which is to be stored.

2. Rack storage installation according to Claim 1, the rolling bases (1) being provided with buffers (10) for transmitting pushing forces, **characterized in that** the guide surfaces (23, 24) for horizontal preliminary positioning purposes are designed such that the buffers (10) of the rolling base which is to be stored are aligned in the horizontal direction with the buffers of a rolling base which is, if appropriate, already located in the storage channel (19), **in that** the bearing surfaces (22) for vertical preliminary positioning purposes are designed such that the buffers of the rolling base which is to be stored are aligned in the vertical direction with the buffers of a rolling base which is, if appropriate, already located in the storage channel (19), and **in that** the centring surfaces (31, 32) for horizontal precision positioning purposes are designed so that the rolling base which is to be stored and/or the rollers thereof is/are aligned with the running rails (17, 18).

3. Rack storage installation according to one of the preceding claims, **characterized in that** centring means which are arranged to the side of the running rails (17) and are in the form of centring rails (30) are provided in the push-in region of the storage channels (19), their centring surfaces (31, 32) enclosing an angle with the vertical, the clear distance between the centring surfaces (31, 32) of the centring rails (30) arranged in a storage channel (19) decreasing from top to bottom.

4. Rack storage installation according to Claim 3, **characterized in that** the centring rails (30) have a top centring surface (31) and a bottom precision centring surface (32).

5. Rack storage installation according to one of the preceding claims, **characterized in that** provided in the push-in region of the storage channel (19) are centring means in the form of push-in brackets (20) which, on the top side, are provided with the bearing surfaces (22) for vertically supporting and aligning a rolling base (1) which is to be stored.

6. Rack storage installation according to Claim 5, **characterized in that** the push-in brackets (20) have an upwardly sloping guide surface in front of the bearing surface (22), as seen in the push-in direction of a rolling base (1) which is to be stored.

7. Rack storage installation according to Claim 5 or 6, **characterized in that** two push-in brackets (20) are provided and are each arranged on one side at the start of the push-in region of the storage channels (19), the push-in brackets (20) having vertically running guide surfaces (23, 24) for the horizontal preliminary positioning of a rolling base which is to be stored.

8. Rack storage installation according to Claim 7, **characterized in that** the guide surfaces (24) define an opening of which the width is greater, by less than the width of the buffer (10) of a rolling base (1), than the distance between the outer side surfaces of the buffers (10).

9. Rack storage installation according to Claims 5 to 8, **characterized in that** the push-in brackets (20) additionally have a stop surface (28) which acts as an end stop and is intended for rolling bases accommodated in the storage channel (19).

10. Rack storage installation according to Claim 9, **characterized in that** the push-in brackets (20) have a run-on surface (27) which slopes up in the direction of the stop surface (28) and is intended for braking the rolling bases.

11. Rack storage installation according to Claims 5 to 10, **characterized in that** the stop surface (28) of the push-in brackets (20) runs at an angle to the vertical.

12. Rack storage installation according to one of the preceding claims, **characterized in that** the running rails (17, 18) have a gradient in the direction of the push-in region.

13. Rack storage installation according to one of the preceding claims, **characterized in that** at least one running rail (17) per storage channel (19) is provided with a depression for guiding the rolling bases.

14. Rolling base (1) intended for a rack storage installation designed according to Claim 1 and for accommodating palletized articles, the rolling base (1), for the purpose of transmitting pushing forces from one rolling base to the other, being provided with buffers (10) which have two side surfaces and an end surface (S) designed as an impact surface, **characterized in that** the buffers (10) project beyond the underside of the frame (3) such that their side surfaces interact with the guide surfaces (23, 24) of the push-in brackets (20) when a rolling base (1) is introduced into storage, and position the rolling base (1) horizontally on a preliminary basis.

15. Rolling base (1) according to Claim 14, **characterized in that** it is provided with a frame (3) on which the buffers (10) are arranged in pairs on the two end sides, the buffers (10) projecting beyond the top side of the frame.

16. Rolling base (1) according to Claim 15, **characterized in that** the buffers (10) are designed obliquely on the inside (I), which is directed towards the frame (3) and projects beyond the top side of the frame (3), and serve as a means of centring and/or fixing pallets which are to be accommodated.

17. Rolling base (1) according to one of Claims 14 to 16, **characterized in that** the buffers (10) each comprise a U-shaped bracket.

18. Rolling base (1) according to one of Claims 15 to 17, **characterized in that** its frame (3) has two transverse carriers (4a, 4b) and at least two longitudinal carriers (5), the transverse carriers (4a, 4b) projecting laterally beyond the longitudinal carriers (5).

19. Rolling base (1) according to Claim 18, **characterized in that** that region of the transverse carriers (4a, 4b) which projects laterally beyond the longitudinal carriers (5) is designed as a stop surface for vertically aligning the rolling bases (1) on the bearing surfaces (22) of the push-in brackets (20).

20. Rolling base (1) according to Claim 18 or 19, **characterized in that** two spaced-apart longitudinal carriers (5) are provided on both longitudinal sides of the rolling base (1), and **in that** the carrying rollers (2) are arranged between the two longitudinal carriers (5) on one longitudinal side.

21. Rolling base (1) according to Claim 20,. **characterized in that** the carrying rollers (2) project beyond the top side of the frame (3) and are spaced apart from the end side by at least the width of a base board (B1, B3) of a pallet.

22. Rolling base (1) according to Claim 20 or 21, **characterized in that** the distance between the carrying rollers (2) corresponds at least to half the width of a pallet.

23. Rolling base (1) according to one of Claims 20 to 22, **characterized in that** the carrying rollers (2) are provided with a protective bracket (8) on the top side.

24. Rolling base (1) according to Claim 23, **characterized in that** the protective bracket (8) has obliquely running side surfaces.

## Revendications

1. Installation de stockage sur étagère, pour recevoir des socles roulants (1), avec une majeure partie de voies de stockage (19), munies de glissières (17, 18), dans lesquelles les socles roulants (1) peuvent être stockés, rangés les uns derrières les autres, les voies de stockage (19) présentant, sur l'un des côtés, une zone d'insertion, pour stocker et déstocker les socles roulants (1) et les voies de stockage (19) présentant, dans la zone d'insertion, des moyens de centrage pour positionner horizontalement et / ou verticalement un socle roulant (1) à stocker, **caractérisée en ce que** des premiers et deuxièmes moyens de centrage (20, 30) sont prévus, les premiers moyens de centrage (20) présentant des surfaces de guidage (23, 24), en vue du prépositionnement horizontal et des surfaces d'appui (22), en vue du prépositionnement vertical et les deuxièmes moyens de centrage (30) présentant des surfaces de centrage (31, 32), en vue du positionnement précis horizontal d'un un socle roulant (1) à stocker.

2. Installation de stockage sur étagère selon la revendication 1, les socles roulants (1) étant munis de tampons (10) pour transmettre des forces de poussée, **caractérisée en ce que** les surfaces de guidage (23, 24) sont constituées en vue du prépositionnement horizontal, de telle sorte que les tampons (10) du socle roulant à stocker sont alignés dans le sens horizontal sur les tampons d'un socle roulant, qui se trouve, le cas échéant, déjà dans la voie de stockage (19), que les surfaces d'appui (22) sont constituées, en vue du prépositionnement vertical, de telle sorte que les tampons du socle roulant à stocker sont alignés, dans le sens vertical, sur les tampons d'un socle roulant, qui se trouve, le cas échéant, déjà dans la voie de stockage (19) et que les surfaces de centrage (31, 32) sont constituées, en vue du positionnement précis horizontal, de telle sorte que le socle roulant à stocker ou ses rouleaux est / sont aligné(s) sur les glissières (17, 18).

3. Installation de stockage sur étagère selon l'une des revendications précédentes, **caractérisée en ce que**, dans la zone d'insertion des voies de stockage (19), des moyens de centrage, sous forme de rails de centrage (30), disposés sur le côté des glissières (17), sont prévus, dont les surfaces de centrage (31, 32) incluent un angle par rapport à la verticale, l'écartement entre les surfaces de centrage (31, 32) des rails de centrage (30), disposés dans une voie de stockage (19) diminuant de haut vers le bas.

4. Installation de stockage sur étagère selon la revendication 3, **caractérisée en ce que** les rails de centrage (30) présentent une surface de centrage supérieure (31) et une surface de centrage précis (32) inférieure.

5. Installation de stockage sur étagère selon l'une des revendications précédentes, **caractérisée en ce qu'**il est prévu, dans la zone d'insertion des voies de stockage (19), des moyens de centrage sous forme d'étriers d'insertion (20), qui sont munis, sur le côté supérieur, des surfaces d'appui (22), en vue du support et de l'alignement verticaux d'un socle roulant (1) à stocker.

6. Installation de stockage sur étagère selon la revendication 5, **caractérisée en ce que** les étriers d'insertion (20) présentent, vu dans le sens d'insertion d'un socle roulant (1) à stocker, devant la surface d'appui (22), une surface de guidage montante.

7. Installation de stockage sur étagère selon la revendication 5 ou 6, **caractérisée en ce qu'**il est prévu deux étriers d'insertion (20), qui sont disposés, sur chacun un côté, au début, côté insertion, de la zone d'insertion des voies de stockage (19), les étriers d'insertion (20) présentant des surfaces de guidage (23, 24) qui passent verticalement en vue du prépositionnement horizontal d'un socle roulant à stocker.

8. Installation de stockage sur étagère selon la revendication 7, **caractérisée en ce que** les surfaces de guidage (24) définissent une ouverture, dont la largeur est supérieure, d'une grandeur inférieure à la largeur d'un tampon (10) d'un socle roulant (1), à l'intervalle entre les surfaces latérales extérieures des tampons (10).

9. Installation de stockage sur étagère selon l'une des revendications 5 à 8, **caractérisée en ce que** les étriers d'insertion (20) présentent par la suite une surface de butée (28), agissant comme butée de fin de course, pour des socles roulants, reçus dans la voie de stockage (19).

10. Installation de stockage sur étagère selon la revendication 9, **caractérisée en ce que** les étriers d'insertion (20) présentent une surface d'accès (27), qui monte par rapport à la surface de butée (28), pour freiner les socles roulants.

11. Installation de stockage sur étagère selon l'une des revendications 5 à 10, **caractérisée en ce que** la surface de butée (28) des étriers d'insertion (20) suit un certain angle par rapport à la verticale.

12. Installation de stockage sur étagère selon l'une des revendications précédentes, **caractérisée en ce que** les glissières (17, 18) présentent une déclivité, qui se dirige vers la zone d'insertion.

13. Installation de stockage sur étagère selon l'une des revendications précédentes, **caractérisée en ce qu'**au moins une glissière (17) par voie de stockage (19), est munie d'un évidement, pour guider les socles roulants.

14. Socle roulant (1) pour une installation de stockage sur étagère, constituée selon la revendication 1, pour recevoir des marchandises palettisées, le socle roulant (1) étant muni, pour transmettre des forces de poussée d'une part sur l'autre socle roulant, de tampons (10), qui présentent une surface frontale (S), constituée en tant que surface de choc et deux surfaces latérales, **caractérisé en ce que** les tampons (10) font saillie sur le côté inférieur du châssis (3), de telle sorte que leurs surfaces latérales coopèrent avec les surfaces de guidage (23, 24) des étiers d'insertion (20), lors du stockage d'un socle roulant (1) et prépositionnent horizontalement le socle roulant (1).

15. Socle roulant (1) selon la revendication 14, **caractérisé en ce que** celui-ci est muni d'un châssis (3), sur lequel les tampons (10) sont disposés par paires sur les deux faces frontales, les tampons (10) faisant saillie sur le côté supérieur du châssis.

16. Socle roulant (1) selon la revendication 15, **caractérisé en ce que** les tampons (10) sont constitués obliquement sur le côté intérieur (I), faisant saillie par rapport au côté supérieur du châssis (3), aligné par rapport au châssis (3) et servent de centrage et / ou de fixation pour des palettes à recevoir.

17. Socle roulant (1) selon l'une des revendications 14 à 16, **caractérisé en ce que** les tampons se composent chacun d'un étrier, constitué en forme de U.

18. Socle roulant (1) selon l'une des revendications 15 à 17, **caractérisé en ce que** son châssis (3) présente deux poutres transversales (4a, 4b) et au moins deux poutres longitudinales (5), les poutres transversales (4a, 4b) faisant saillie latéralement par rapport aux poutres longitudinales (5).

19. Socle roulant (1) selon la revendication 18, **caractérisé en ce que** la zone des poutres transversales (4a, 4b), qui fait saillie latéralement par rapport aux poutres longitudinales (5), est constituée en tant que surface de butée en vue de l'alignement vertical des socles roulants (1) sur les surfaces d'appui (22) des étriers d'insertion (20).

20. Socle roulant (1) selon la revendication 18 ou 19, **caractérisé en ce qu'**il est prévu, sur les deux côtés longitudinaux du socle roulant (1), deux poutres longitudinales (5), écartées l'une de l'autre et que les rouleaux porteurs (2) sont disposés entre les deux poutres longitudinales (5) d'un côté longitudinal.

21. Socle roulant (1) selon la revendication 20, **caractérisé en ce que** les rouleaux porteurs (2) font saillie par rapport au côté supérieur du châssis (3) et sont éloignés du côté frontal d'au moins la largeur d'une planche de fond (B1, B3) d'une palette.

22. Socle roulant (1) selon la revendication 20 ou 21, **caractérisé en ce que** l'intervalle entre les rouleaux porteurs (2) correspond au moins à la moitié de la largeur d'une palette.

23. Socle roulant (1) selon l'une des revendications 20 à 22, **caractérisé en ce que** les rouleaux porteurs (2) sont munis, sur le côté supérieur, d'un étrier de protection (8).

24. Socle roulant (1) selon la revendication 23, **caractérisé en ce que** l'étrier de protection (8) présente des surfaces latérales, qui passent obliquement.
